# EUROPEAN PATENT SPECIFICATION

(11) **EP 2 604 334 B1**
(45) Date of publication and mention of the grant of the patent: **08.04.2015**
(21) Application number: 12194647.9
(22) Date of filing: 28.11.2012
(51) Int. Cl.: B01J 3/00, B09B 3/00, C02F 11/08, C02F 1/02, C02F 1/72, C02F 101/30, C02F 103/14, C02F 103/34, C02F 1/74, C02F 1/78

(54) **Liquid waste treatment apparatus**
Flüssigabfallbehandlungsvorrichtung
Appareil de traitement de déchets liquides

(30) Priority: 15.12.2011 JP 2011274592; 12.10.2012 JP 2012227258
(43) Date of publication of application: 19.06.2013
(73) Proprietor: Ricoh Company, Ltd., Tokyo 143-8555 (JP)
(72) Inventor: SUZUKI, Shogo, Tokyo 143-8555 (JP); MIYAZAWA, Hideyuki, Tokyo 143-8555 (JP); OKADA, Noriaki, Tokyo 143-8555 (JP); MURATA, Shozo, Tokyo 143-8555 (JP); MUTOH, Toshiyuki, Tokyo 143-8555 (JP); YAMADA, Shigeru, Tokyo 143-8555 (JP); NAKASHIMA, Makito, Tokyo 143-8555 (JP); UTSUKI, Aya, Tokyo 143-8555 (JP); HAYAKAWA, Kenichi, Tokyo 143-8555 (JP); AOKI, Kimio, Tokyo 143-8555 (JP); ZAMA, Yuu, Tokyo 143-8555 (JP)
(74) Representative: Leeming, John Gerard

(56) References cited:
- EP-A2- 0 844 020
- WO-A1-96/02471
- WO-A1-02/100528
- JP-A- 2011 056 338
- JP-A- 2011 121 052
- US-A- 5 301 664
- US-A1- 2005 054 891
- US-A1- 2008 135 496
- US-A1- 2010 006 371

## Description

The present invention relates to a liquid waste treatment apparatus for decomposing organic matter in a treatment-object fluid by applying pressure and heat to the treatment-object fluid while mixing the treatment-object fluid containing the organic matter with an oxidizing agent.

Heretofore, a method of conducting biological treatment using activated sludge has been generally used as a method for purifying liquid wastes such as human waste, sewage, domestic wastewater from residential areas, livestock excreta, and effluents from food processing factories. However, the method is incapable of treating liquid wastes containing a high-concentration organic solvent, which impede activities of microorganisms in the activated sludge, with the concentration remaining as it is, or is incapable of treating liquid wastes containing fine particles of non-biodegradable plastics. Also, the activated sludge increasingly grows to multiply in liquid wastes having a high content of undissolved organic suspended solids in a liquid, thus leading to an increase in the amount of aeration or the amount of excess treated sludge and, in turn, to a rise in costs, and therefore, it is necessary that the suspended solids be removed in advance by physical and chemical treatments, such as through a sieve or by coagulation and sedimentation.

Meanwhile, there has recently been made the development of a liquid waste treatment apparatus for decomposing organic matter in liquid wastes in a short time by changing water in the liquid wastes into a superheated vapor state, a supercritical state or a subcritical state under an environment of high temperature and high pressure. In this type of liquid waste treatment apparatus, for example, liquid waste is heated to a temperature of 374°C or higher and pressurized to a pressure of 22 MPa or higher in a reaction tank thereby to turn into the supercritical state in which the liquid waste takes on properties intermediate between liquid and gas. Alternatively, the temperature and pressure of the liquid waste are set somewhat lower than 374°C and 22 MPa, respectively, thereby to change the liquid waste into the subcritical state in which the liquid waste takes on properties somewhat closer to liquid than the supercritical state, or the liquid waste is changed into the superheated vapor state in which the liquid waste has a temperature of 374°C or higher and a pressure of 10 MPa or lower. In a liquid in the supercritical state, the subcritical state or the superheated vapor state, organic matter is dissolved and hydrolyzed in an instant, or the organic matter or ammonium nitrogen undergoes oxidative decomposition in an instant by being mixed with an oxidizing agent. Even liquid wastes containing a high-concentration organic solvent or liquid wastes containing fine particles of plastics can be easily purified, which has not been possible with the biological treatment. Also, even in liquid wastes containing organic suspended solids in large amounts, the large amounts of suspended solids undergo substantially complete oxidative decomposition, so that most of them can be decomposed into water, a nitrogen gas and carbon dioxide.

In such a liquid waste treatment apparatus, a sulfuric acid is formed in the process of oxidative decomposition of organic matter having a sulfonyl group, or a hydrochloric acid is formed in the process of oxidative decomposition of organic matter having a chloro group. Thus, corrosion occurs inside the reaction tank as soon as iron, stainless steel or the like is used as a material for the reaction tank. Meanwhile, the reaction tank needs to have the performance capabilities of resisting a pressure of 10 MPa or higher, and therefore, it is necessary that metals of high strength, rather than plastics of low strength, be used for the reaction tank. Although metals capable of achieving both high corrosion resistance and high pressure resistance include titanium and nickel alloys, these metals are very expensive and, therefore, when the metals are used as base material for the reaction tank, the reaction tank becomes so expensive as to be unsuitable for practical use. Also, when titanium is used for the reaction tank, its strength becomes very low under high-temperature conditions and, therefore, even if its thickness is increased, it is difficult for the reaction tank to offer required resistance to pressure.

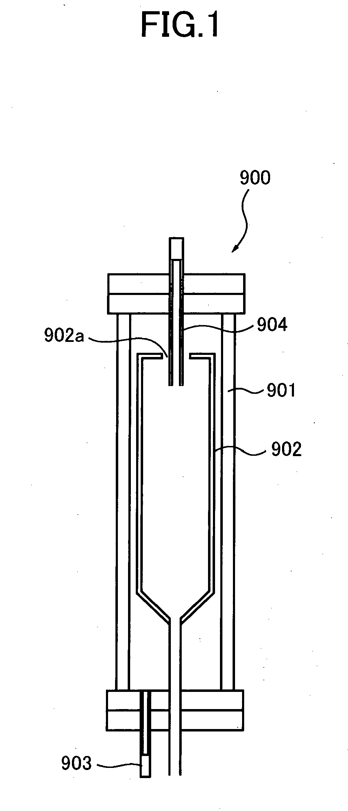

Meanwhile, a pressure balanced reaction tank described in Japanese Patent Application Publication No. 2008-207135 is known as a reaction tank in a conventional liquid waste treatment apparatus. As shown in FIG. 1, a pressure balanced reaction tank 900 has a double-tube structure including an outer cylindrical body 901 in tubular form, and a reaction vessel 902 in tubular form disposed inside the outer cylindrical body 901. The outer cylindrical body 901 is made of a stainless material having a sufficient thickness for resisting high pressure. Also, the reaction vessel 902 is made of a corrosion-resistant nickel alloy. A lower lid of the outer cylindrical body 901 has an air feed pipe 903 formed therethrough, which is configured to pressure-feed air as an oxidizing agent into an inter-tube space formed inside the outer cylindrical body 901 between the outer cylindrical body 901 and the reaction vessel 902. Also, the reaction vessel 902 with its lower end portion passed through the lower lid of the outer cylindrical body 901 is cantilevered by the lower lid. Then, a through-hole 902a to receive an inflow pipe 904 is formed in an upper end wall of the reaction vessel, located on the free end side of the reaction vessel 902. Inside the outer cylindrical body 901, an end portion of the inflow pipe 904 extending from outside the outer cylindrical body 901 through an upper lid of the outer cylindrical body into the outer cylindrical body 901 enters into the reaction vessel 902 through the through-hole 902a provided in the upper end wall of the reaction vessel 902. Incoming liquid waste pressure-fed via the inflow pipe 904 flows into the reaction vessel 902 and then moves through the reaction vessel 902 from the upper lid side of the outer cylindrical body toward the lower lid of the outer cylindrical body.

In the pressure balanced reaction tank 900, the liquid waste moves in this manner, while the air as the oxidizing agent moves in the following manner. Specifically, the air pressure-fed into the inter-tube space between the outer cylindrical body 901 and the reaction vessel 902 via the air feed pipe 903 provided in the lower lid of the outer cylindrical body 901 moves through the inter-tube space from its lower part toward its upper part and to the vicinity of the upper lid of the outer cylindrical body 901. In the vicinity of the upper lid, a gap is formed between the through-hole 902a provided in the upper end wall of the reaction vessel 902 and the inflow pipe 904 having a smaller diameter than that of the through-hole 902a. Then, the inter-tube space between the outer cylindrical body 901 and the reaction vessel 902 communicates with an internal space of the reaction vessel 902 through the gap. In the inter-tube space, the air which has moved to the vicinity of the upper lid of the outer cylindrical body 901 flows through the gap between the through-hole 902a and the inflow pipe 904 and into the reaction vessel 902, and thereafter, the air is mixed with the liquid waste and a mixture moves through the reaction vessel 902 from its upper part toward its lower part.

The liquid waste flowing into the reaction vessel 902 through the inflow pipe 904 and the air flowing into the reaction vessel 902 through the inter-tube space and the gap are both pressure-fed into the reaction vessel 902 by a pump (unillustrated). Thus, in the reaction vessel 902, a mixed fluid of the liquid waste and the air assumes a strong pressure condition. Also, as previously mentioned, the inter-tube space communicates with the inside of the reaction vessel 902 through the gap between the through-hole 902a and the inflow pipe 904, and thus, atmospheric pressure in the inter-tube space becomes nearly equal to the pressure of the mixed fluid in the reaction vessel 902. In this manner, the atmospheric pressure in the inter-tube space becomes nearly equal to the pressure of the mixed fluid in the reaction vessel 902, and thereby, great pressure can be applied to the mixed fluid in the reaction vessel 902 with little pressure difference arising between the inside and outside of the reaction vessel 902. Thereby, the reaction vessel 902 made of the expensive nickel alloy can be given thin-walled, non-pressure specifications, thus achieving cost reduction.

However, the pressure balanced reaction tank 900 involves a danger that cantilevering by the lower lid of the outer cylindrical body 901 may become impossible. Specifically, stainless steel generally has a higher coefficient of linear expansion than that of metals superior in corrosion resistance, such as nickel alloys and titanium. Thus, the outer cylindrical body 901 made of the stainless steel has a higher coefficient of linear expansion than that of the reaction vessel 902 made of the nickel alloy. In FIG. 1, the lower end portion of the reaction vessel 902 inserted into a through-hole provided in the lower lid of the outer cylindrical body 901 is tightly in close contact with the through-hole. Under this condition, the outer cylindrical body 901 and the reaction vessel 902 heated to about 374°C undergo thermal expansion by amounts corresponding to their respective coefficients of linear expansion and heating temperature, and thus, the outer cylindrical body 901 and the reaction vessel 902 become larger in longitudinal dimension and diameter. Even if the longitudinal dimension of the reaction vessel 902 is increased by the thermal expansion, the amount of increase is accommodated by a gap between the upper end as the free end of the reaction vessel 902 and the upper lid of the outer cylindrical body 901. Thus, even when the reaction vessel 902 increases in longitudinal dimension with increasing heat, a large problem does not arise. However, when a diameter of the outer cylindrical body 901 is increased with increasing heat, there is a danger in that the reaction vessel 902 cannot be cantilevered by the lower lid of the outer cylindrical body 901.

Detailed description will be given below with regard to the reason that cantilevering becomes impossible. The outer cylindrical body 901 and the reaction vessel 902 heated to about 374°C increase in diameter by amounts corresponding to the heating temperature and their own coefficients of linear expansion. At this time, because of a difference between the coefficients of linear expansion, an inside diameter of the through-hole provided in the lower lid of the outer cylindrical body 901 becomes larger than an outside diameter of the lower end portion of the reaction vessel 902 inserted into the through-hole, and a gap is formed between an inner wall of the through-hole and an outer peripheral surface of the lower end portion of the reaction vessel 902. Thus, the lower end portion of the reaction vessel 902 has a rattletrap phenomenon in the through-hole of the lower lid of the outer cylindrical body 901, which in turn makes it impossible for the lower lid to cantilever the reaction vessel 902.

US 2008/0135496 discloses a liquid waste treatment apparatus in accordance with the preamble of appended claim 1. WO 02/100528 discloses an apparatus for carrying out a homogeneously catalysed reaction in a reactor. US patent 5,301,664 discloses an apparatus of the hand-held type for delivering physiologically active compounds to a target human or animal.

The present invention has been made in view of the foregoing background. An object of the present invention is to provide a liquid waste treatment apparatus in which an inner tubular body (for example, the reaction vessel 902) of a reaction tank can be cantilevered by an outer tubular body (for example, the outer cylindrical body 901) over a long period.

In order to attain the above object, the present invention provides a liquid waste treatment apparatus according to the appended claims.
FIG. 1 is a schematic view showing a configuration of a conventional pressure balanced reaction tank.
FIG. 2 is a flow sheet showing a waste water treatment apparatus according to a first embodiment and a flow of treatment.
FIG. 3 is a longitudinal sectional view showing a reaction tank of the waste water treatment apparatus according to the first embodiment.
FIG. 4 is an exploded sectional view showing the reaction tank shown in FIG. 3.
FIG. 5 is an exploded sectional view showing a reaction tank of a waste water treatment apparatus according to a first modification.
FIG. 6 is a longitudinal sectional view showing a reaction tank of a waste water treatment apparatus according to a second modification.
FIG. 7 is a flow sheet showing a waste water treatment apparatus according to a second embodiment and a flow of treatment.
FIG. 8 is a longitudinal sectional view showing a reaction tank of the waste water treatment apparatus according to the second embodiment.
FIG. 9 is an enlarged longitudinal sectional view showing a downstream end portion of the reaction tank shown in FIG. 8 in a fluid transport direction.

Description will be given below with regard to a first embodiment of a waste water treatment apparatus to which the present invention is applied.

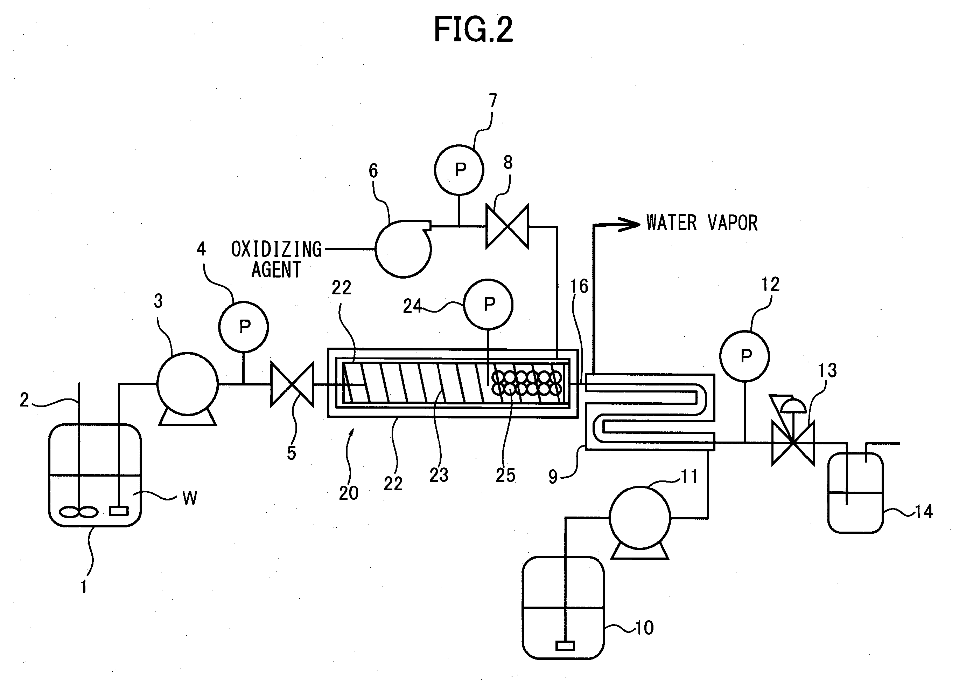

Firstly, description will be given with regard to a basic configuration of the waste water treatment apparatus according to the first embodiment. FIG. 2 is a flow sheet showing the waste water treatment apparatus according to the first embodiment and a flow of treatment. The waste water treatment apparatus according to the first embodiment includes a raw water tank 1, an agitator 2, a raw water feed pump 3, a raw water pressure gauge 4, a raw water inlet valve 5, an oxidizing agent pressure-feed pump 6, an oxidizing agent pressure gauge 7, an oxidizing agent inlet valve 8, a heat exchanger 9, a heating medium tank 10, a heat exchange pump 11, an outlet pressure gauge 12, an outlet valve 13, a gas-liquid separator 14, a reaction tank 20, and a controller (unillustrated).

The controller includes a corresponding number of power supply circuits each formed of a combination of an earth leakage breaker, a magnetic switch, a thermal relay and the like, which are provided individually for the agitator 2, the raw water feed pump 3, the oxidizing agent pressure-feed pump 6, and the heat exchange pump 11, respectively. Then, the magnetic switches of the power supply circuits are turned on or off under control signals from a programmable sequencer thereby to perform individual power on-off control of these devices.

The raw water pressure gauge 4, the oxidizing agent pressure gauge 7 and the outlet pressure gauge 12 output voltages having values according to pressure detection results. Also, a thermometer 24 of the reaction tank 20 outputs a voltage according to a temperature detection result. The output voltages from these measuring devices are individually converted into digital data by an A-D (analog-to-digital) converter (unillustrated), and then, the digital data is inputted as sensing data to the programmable sequencer. The programmable sequencer performs drive control on various devices, based on the sensing data.

The raw water tank 1 stores liquid waste W containing organic matter of relatively high molecular weight, in an untreated state. The liquid waste W is formed of at least any one of organic-solvent liquid waste, paper-manufacturing liquid waste produced by a paper manufacturing process, and toner-manufacturing liquid waste produced by a toner manufacturing process. The paper-manufacturing liquid waste and the toner-manufacturing liquid waste may contain indecomposable organic matter.

The agitator 2 stirs the liquid waste W as a treatment-object fluid thereby to effect uniform dispersion of suspended solids contained in the liquid waste and thus ensure uniform organic matter concentrations. The liquid waste W in the raw water tank 1 is continuously pressure-fed under high pressure into the reaction tank 20 through the raw water inlet valve 5 by the raw water feed pump 3 formed of a high-pressure pump. An inflow pressure of the liquid waste W by drive of the raw water feed pump 3 is detected by the raw water pressure gauge 4 and is inputted as sensing data to the programmable sequencer of the controller. The programmable sequencer maintains the inflow pressure of the liquid waste W within a predetermined range by adjusting the amount of drive of the raw water feed pump 3. Adjustment of the amount of drive may be accomplished by on-off control, or may be accomplished by an inverter varying pumping speed of the raw water feed pump 3.

The oxidizing agent pressure-feed pump 6 formed of a compressor feeds air taken in as an oxidizing agent into the reaction tank 20 through the oxidizing agent inlet valve 8, while compressing the air to about the same pressure as the inflow pressure of the liquid waste W An inflow pressure of the air by drive of the oxidizing agent pressure-feed pump 6 is detected by the oxidizing agent pressure gauge 7 and is inputted as sensing data to the programmable sequencer of the controller. The programmable sequencer maintains the inflow pressure of the air within a predetermined range by adjusting the amount of drive of the oxidizing agent pressure-feed pump 6. The range is determined based on the stoichiometric amount of oxygen required for complete oxidation of the organic matter in the liquid waste. More specifically, the amount of oxygen required for the complete oxidation of the organic matter is calculated based on organic matter concentrations, nitrogen concentrations and phosphorus concentrations in the liquid waste W, and the like, such as COD (Chemical Oxygen Demand), total nitrogen (TN) and total phosphorus (TP) of the liquid waste, and the range of control of the inflow pressure of the air is set based on calculated results.

Settings of the range of control of the inflow pressure of the air are done by an operator; however, when the type of the organic matter contained in the liquid waste W is stable without varying with time and there is a relatively good correlation between physical properties such as turbidity, light transmittance, electrical conductivity and specific gravity and the amount of oxygen, the programmable sequencer may be configured to carry out processing to automatically compensate for the range of control, based on results obtained by a sensor or the like detecting the physical properties.

Besides the air, any one of an oxygen gas, an ozone gas and hydrogen peroxide, or a mixture of two or more kinds of these may be used as the oxidizing agent.

Although the liquid waste W as the treatment-object fluid, before flowing into the reaction tank 20, exists in a liquid state, the liquid waste W after flowing into the reaction tank 20 turns into a different state from a liquid, specifically a subcritical fluid or a critical fluid, as later described. Then, after the liquid waste W has been discharged from the reaction tank 20, the liquid waste W is separated into a liquid and a gas by the gas-liquid separator 14, while being rapidly cooled and depressurized.

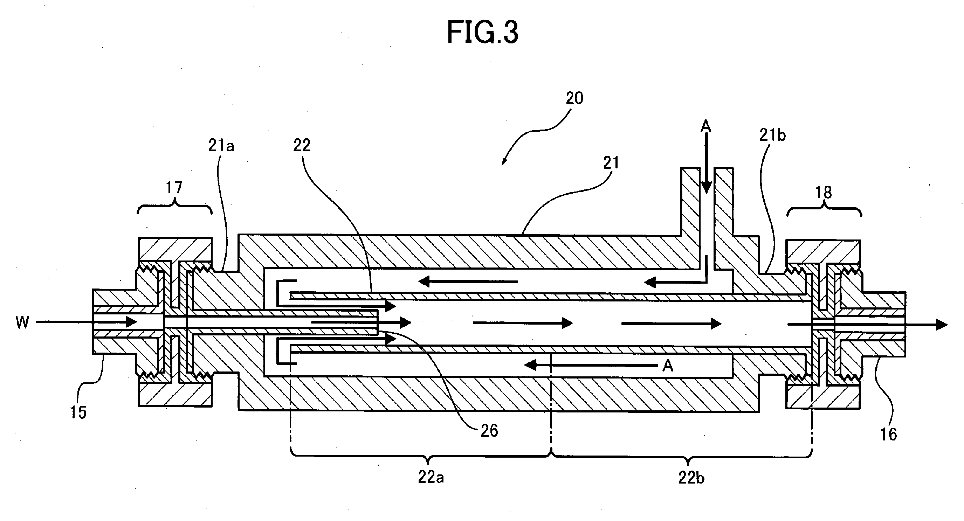

FIG. 3 is a longitudinal sectional view showing the reaction tank 20. The reaction tank 20 has a double-tube structure formed of an outer tube 21 and an inner tube 22 accommodated inside the outer tube 21. A heater 23 to heat the liquid waste W is wound around the inner tube 22 or the outer tube 21. The inner tube 22 is a tube made of titanium which is resistant to acids. On the other hand, the outer tube 21 is a tube made of a metallic material such as stainless steel which is superior in strength. An internal pressure of the reaction tank 20 is controlled to a high pressure of 0.5 to 30 MPa or desirably 5 to 30 MPa. The outer tube 21 has a heavy wall thickness so as to be capable of resisting such a high pressure. On the other hand, the titanium which offers superior resistance to corrosion is adopted as a material for the inner tube 22, because corrosion resistance rather than pressure resistance is required for the inner tube 22.

The liquid waste W pressure-fed toward the reaction tank 20 by the raw water feed pump (indicated by 3 in FIG. 2) flows through the raw water inlet valve (indicated by 5 in FIG. 2) and then into a feed pipe 15 connected to the outlet side of the raw water inlet valve. The feed pipe 15 is connected by an inlet joint 17 to an inflow pipe 26 provided on the inlet side of the reaction tank 20. The liquid waste W pressure-fed from the feed pipe 15 into the reaction tank 20 moves through the reaction tank 20 to flow through the inflow pipe 26 and into the inner tube 22. Then, the liquid waste W moves through the inner tube 22 along its longitudinal direction from the left-hand side toward the right-hand side of the sheet as seen in FIG. 3.

Meanwhile, air A pressure-fed into the reaction tank 20 by the oxidizing agent pressure-feed pump 6 flows into an inter-tube space between the outer tube 21 and the inner tube 22. Then, the air A moves through the inter-tube space along its longitudinal direction from the right-hand side toward the left-hand side of the sheet as seen in FIG. 3. The inner tube 22 has an opening in an end portion on the left-hand side as seen in FIG. 3, and the inflow pipe 26 configured to allow the liquid waste W to flow into the inner tube 22 is inserted into the inner tube 22 through the opening. A gap is formed between an outer wall of the inflow pipe 26 and an inner wall of the inner tube 22, and the air A which has moved to the leftmost end of the inter-tube space as seen in FIG. 3 enters into the inner tube 22 through the gap and is mixed with the liquid waste W

The inside of the inner tube 22 is under conditions of high temperature in addition to high pressure. The temperature lies between 100°C and 700°C or desirably between 200°C and 550°C. At the time of start of operation of the illustrated waste water treatment apparatus, a mixture of the liquid waste W and the air A in the inner tube 22 is subjected to pressure but is not so high in temperature. Therefore, at the time of the start of the operation, the programmable sequencer causes the heater (indicated by 23 in FIG. 2) to produce heat and thereby increase the temperature of the mixture in the inner tube 22 to 200°C to 550°C. Then, the liquid waste W in the inner tube 22 is changed into a superheated vapor state, a subcritical state or a supercritical state, and the organic matter in the liquid waste undergoes sharp hydrolysis and oxidative decomposition while being rapidly dissolved. If organic matter concentrations in the liquid waste W are somewhat high, when the sharp oxidative decomposition of the organic matter is started in this manner, the fluid in the superheated vapor state, the subcritical state or the supercritical state spontaneously produces heat by heat produced by the oxidative decomposition. This is the same as a phenomenon in which, once alcohol or the like is set on fire with a match, thereafter the alcohol continues burning until the alcohol undergoes complete oxidative decomposition. Thus, the programmable sequencer causes the heater (23) to produce heat, only when necessary, based on detected results obtained by the thermometer (24).

When the oxidative decomposition of the organic matter is started in the inner tube 22 and the inner tube 22 is maintained at high temperature, the air A comes to flow into the inner tube 22, while being preheated in the inter-tube space between the inner tube 22 and the outer tube 21.

In the inner tube 22, a situation may arise where a hydrochloric acid derived from a chloro group of an organic chloride or a sulfuric acid derived from a sulfonyl group such as an amino acid is produced and thus the inner wall of the inner tube 22 is placed under strongly acidic conditions. Therefore, the tube made of titanium superior in corrosion resistance is adopted as the inner tube 22. However, the titanium is a very expensive material, and thus, when a thickness of the inner tube 22 is increased to a value capable of resisting high pressure, costs become very high. Therefore, the outer tube 21 is disposed outside the inner tube 22 so that required resistance to pressure is achieved by the outer tube 21 made of the stainless steel or the like which is more inexpensive than the titanium. A pressure in the inter-tube space between the inner tube 22 and the outer tube 21 has substantially the same value as the pressure in the inner tube 22 by the air A pressure-fed into the inter-tube space, and thus, the inner tube 22 made of thin-walled titanium is not subjected to great pressure.

The treatment-object fluid in the superheated vapor state, the subcritical state or the supercritical state which has moved to the vicinity of an end portion of the inner tube 22 on the right-hand side as seen in FIG. 3 is in a state in which the organic matter and an inorganic compound have undergone substantially complete oxidative decomposition. A transport pipe 16 to transport the treatment-object fluid purified in the inner tube 22 is connected through an outlet joint 18 to a downstream end portion of the inner tube 22 in a fluid transport direction. The purified treatment-object fluid enters into the transport pipe 16.

In the transport pipe 16, the purified treatment-object fluid is cooled to turn into a liquid. In the reaction tank 20, when another liquid waste W flows from the inflow pipe 26 into the inner tube 22, an internal pressure of the inner tube 22 increases correspondingly. Then, the pressure of the liquid in the transport pipe 16 also increases. The outlet valve 13 formed of a back-pressure valve is connected to the distal end of the transport pipe 16. When the pressure in the transport pipe 16 becomes higher than a threshold value, the outlet valve 13 automatically opens itself to discharge the liquid in the transport pipe 16 and thereby maintain the pressure in the transport pipe 16 lower than the threshold value. The liquid discharged from the transport pipe 16 by the outlet valve 13 is separated into a treated liquid and a gas by being sharply depressurized to the neighborhood of atmospheric pressure. Then, the liquid is separated into the treated liquid and the gas by the gas-liquid separator 14, and the treated liquid is stored in a treated liquid tank. Also, the gas is released into the atmosphere.

The treated liquid is in a state in which even extremely low-molecular organic matter which cannot be completely removed with biological treatment using activated sludge has undergone substantially complete oxidative decomposition, and thus, the treated liquid contains few suspended solids and little organic matter. The treated liquid merely contains extremely slight inorganic matter which has not been completely oxidized. Even in the as-is state, the treated liquid can be reused as industrial water, depending on the purpose of use. Also, when the treated liquid is subjected to a filtering process by an ultrafiltration membrane, the treated liquid can also be used as an LSI cleaning liquid or the like. The gas separated by the gas-liquid separator 14 has carbon dioxide and a nitrogen gas as main ingredients.

In the reaction tank 20, all the following reactions occur in the internal space of the inner tube 22: specifically, the liquid waste W is changed into the treatment-object fluid in the superheated vapor state, the subcritical state or the supercritical state, and substances contained in the treatment-object fluid undergo complete oxidative decomposition. The treatment-object fluid flows through the internal space of the inner tube 22 from the left side to the right side as seen in the drawing along a longitudinal direction of the tube. The inner tube 22 through which the treatment-object fluid flows in this manner is divided into two portions: a first decomposition reactor 22a and a second decomposition reactor 22b, which both have the same diameter and communicate with each other. A portion of communication between the first decomposition reactor 22a and the second decomposition reactor 22b does not become narrow, or piping having a smaller diameter is not used to link together the first decomposition reactor 22a and the second decomposition reactor 22b.

The first decomposition reactor 22a is located at a position upstream of the second decomposition reactor 22b in the fluid transport direction. Then, the first decomposition reactor 22a changes the liquid waste W into a fluid in a superheated vapor state, a subcritical state or a supercritical state, and hydrolyzes organic matter in the fluid into low-molecular form. In the waste water treatment apparatus according to the first embodiment, the air as the oxidizing agent is supplied to the first decomposition reactor 22a, and thus, oxidative decomposition of various compounds also takes place in the first decomposition reactor 22a. The oxidizing agent may be introduced only into the second decomposition reactor 22b such that mainly hydrolysis of the compounds into low-molecular form concentrically takes place in the first decomposition reactor 22a.

Organic matter or ammonium nitrogen which has not undergone complete oxidative decomposition remains with some concentration in the treatment-object fluid which has passed through the first decomposition reactor 22a. The second decomposition reactor 22b is filled with particles of palladium as a catalyst (indicated by 25 in FIG. 2) for accelerating oxidative decomposition of the low-molecular organic matter or the ammonium nitrogen which has not been completely removed in the first decomposition reactor 22a. In the second decomposition reactor 22b, the treatment-object fluid mixed with the air comes into contact with the catalyst under conditions of high temperature and high pressure, and thereby, the low-molecular organic matter undergoes substantially complete oxidative decomposition.

In such a configuration, in the single inner tube 22, the first decomposition reactor 22a and the second decomposition reactor 22b communicate with each other without becoming narrow and piping having a smaller diameter is not used to link together the first decomposition reactor 22a and the second decomposition reactor 22b, and thus, cleaning operation for the piping becomes unnecessary. Thereby, the frequency of cleaning is reduced and maintenance characteristics can be improved, as compared to the conventional apparatus.

Desirably, a catalyst containing at least any one element of Ru, Pd, Rh, Pt, Au, Ir, Os, Fe, Cu, Zn, Ni, Co, Ce, Ti, Mn, and C is used as the catalyst for accelerating oxidative decomposition of the low-molecular organic matter or the ammonium nitrogen.

Incidentally, a catalyst specialized for oxidative decomposition of the low-molecular organic matter or a catalyst specialized for oxidative decomposition of the ammonium nitrogen may be used as the catalyst (25) filled into the second decomposition reactor 22b, depending on the types or concentrations of the compounds contained in the liquid waste W Also, a different catalyst from the catalyst filled into the second decomposition reactor 22b may be filled into the first decomposition reactor 22a. Of the first decomposition reactor 22a and the second decomposition reactor 22b, the first decomposition reactor 22a alone may also be filled with the catalyst. In this case, it is desirable that a catalyst specialized for hydrolysis or oxidative decomposition of high-molecular organic matter into low-molecular organic matter be used as the catalyst. Also, a configuration may be such that the oxidizing agent is introduced only into the second decomposition reactor 22b and, after hydrolysis of the organic matter into low-molecular form in the first decomposition reactor 22a, oxidative decomposition of the organic matter takes place in the second decomposition reactor 22b.

When the concentration of the organic matter in the liquid waste W is relatively high, a large amount of heat is produced by the oxidative decomposition of the organic matter. Thus, as described above, heating by the heater (23) is necessary in the early stage of operation; however, after the start of the oxidative decomposition of the organic matter, a temperature required to change the liquid waste W into the superheated vapor state, the subcritical state or the supercritical state, or a higher temperature can be spontaneously maintained by heat produced by the oxidative decomposition, depending on the concentration of the organic matter. Therefore, when a detected result of the temperature in the inner tube 22 obtained by the thermometer (24) becomes equal to or higher than the temperature required to change the liquid waste W into the superheated vapor state, the subcritical state or the supercritical state, the programmable sequencer of the controller turns off the heater (23) as a heating device. Thereby, a waste of energy consumption can be suppressed.

Also, when the concentration of the organic matter in the liquid waste W is very high, the amount of heat produced by the oxidative decomposition of the organic matter may exceed the amount of heat required to increase the temperature another liquid waste W flowing into the inner tube 22 to a predetermined temperature to, thus, cause the temperature in the inner tube 22 to continue increasing. Therefore, when a detected result of the temperature in the inner tube 22 obtained by the thermometer (24) becomes higher than a predetermined upper limit temperature, the programmable sequencer of the controller performs processing for reducing a feed rate at which the raw water feed pump (3) feeds the liquid waste W to the first decomposition reactor 22a, or a feed rate at which the oxidizing agent delivery pump (6) feeds the air A to the first decomposition reactor 22a. Thereby, the temperature in the inner tube 22 can be prevented from becoming higher than the upper limit temperature. Incidentally, when a heat exchanger configured to perform not only heat exchange with the transport pipe 16 but also heat exchange with the outer tube 21 is used as the heat exchanger 9 to be described later, an increase in the amount of heat exchange fluid fed around the outer tube 21, rather than a reduction in the amount of feed of the liquid waste W or the air A, may be effected.

In the waste water treatment apparatus according to the first embodiment, as described previously, the inter-tube space between the inner tube 22 and the outer tube 21 functions as an introduction path through which the air A as the oxidizing agent is introduced into the inner tube 22. Then, the air A flowing into the inner tube 22 moves toward the inlet port provided on the left end of the inner tube 22, while contacting the outer wall of the inner tube 22. At this time, heat produced in the first decomposition reactor 22a and the second decomposition reactor 22b of the inner tube 22 is transferred to the air A through the wall of the inner tube 22 thereby to preheat the air A. Thus, in the waste water treatment apparatus according to the first embodiment, the wall of the inner tube 22 functions as a preheating device for preheating the air A. In such a configuration, the heat produced in the inner tube 22 can be utilized to preheat the air A, without external supply of energy for preheating the air A.

The heat exchanger 9 is attached to an outer wall of the transport pipe 16 for transporting the treatment-object fluid toward the gas-liquid separator 14 while cooling the treatment-object fluid which has passed through the second decomposition reactor 22b of the inner tube 22. A main body of the heat exchanger 9 is formed of an outer pipe covering the outer wall of the transport pipe 16, and space between the outer pipe and the outer wall of the transport pipe 16 is filled with a heat exchange fluid such as water. Then, heat exchange between the outer wall of the transport pipe 16 and the heat exchange fluid is performed. When the reaction tank 20 is under operating conditions, a liquid having a very high temperature flows through the transport pipe 16, and thus, heat is transferred from the transport pipe 16 to the heat exchange fluid in the heat exchanger 9 thereby to heat the heat exchange fluid. A direction of transport of the heat exchange fluid in the heat exchanger 9 is opposite to a direction of transport of a liquid in the transport pipe 16, as is the case with what is called counter flow type heat exchange. In other words, the heat exchange fluid is fed from the outlet valve 13 side toward the reaction tank 20. This is performed by the heat exchange pump 11 feeding the heat exchange fluid to the heat exchanger 9 while sucking the heat exchange fluid in the heating medium tank 10. The heat exchange fluid which has passed through the heat exchanger 9 and been heated is fed to a generator through a pipe (unillustrated). In the generator, electric power is generated by turning a turbine by a flow of air produced when the heat exchange fluid having an increased pressure by heating is changed from a liquid state to a gas state.

Incidentally, part of the heat exchange fluid which has passed through the heat exchanger 9 may be transported to the inflow pipe 26 or the raw water tank 1 by a branch pipe and be utilized to preheat the liquid waste W

An outlet thermometer (unillustrated) for detecting the temperature of the liquid in the transport pipe 16 is provided in the vicinity of the outlet valve 13 in the transport pipe 16. The programmable sequencer of the controller controls actuation of the heat exchange pump 11 so that detected results obtained by the outlet thermometer are maintained within a predetermined range of numeric values. Specifically, when a detected result obtained by the outlet thermometer reaches a predetermined upper limit temperature, the amount of actuation of the heat exchange pump 11 is increased to increase the amount of supply of the heat exchange fluid to the heat exchanger 9 and thereby enhance the cooling function of the heat exchanger 9. On the other hand, when a detected result obtained by the outlet thermometer reaches a predetermined lower limit temperature, the amount of actuation of the heat exchange pump 11 is reduced to reduce the amount of supply of the heat exchange fluid to the heat exchanger 9 and thereby lessen the cooling function of the heat exchanger 9. In such a configuration, the amount of heat exchange can be properly adjusted to maintain the temperature of the liquid in the transport pipe 16 within a certain range.

Incidentally, the heat exchanger 9 may be mounted to the outer tube 21 of the reaction tank 20, in addition to or rather than being mounted to the transport pipe 16. In this case, the amount of transport of the heat exchange fluid to surroundings of the outer tube 21 is adjusted so that results detected by the thermometer (24) fall within a predetermined range, and thereby, an excessive decrease in the temperature in the inner tube 22 can be avoided, while an excessive increase in the temperature in the inner tube 22 is avoided.

Next, description will be given with regard to a characteristic configuration of the waste water treatment apparatus according to the first embodiment.

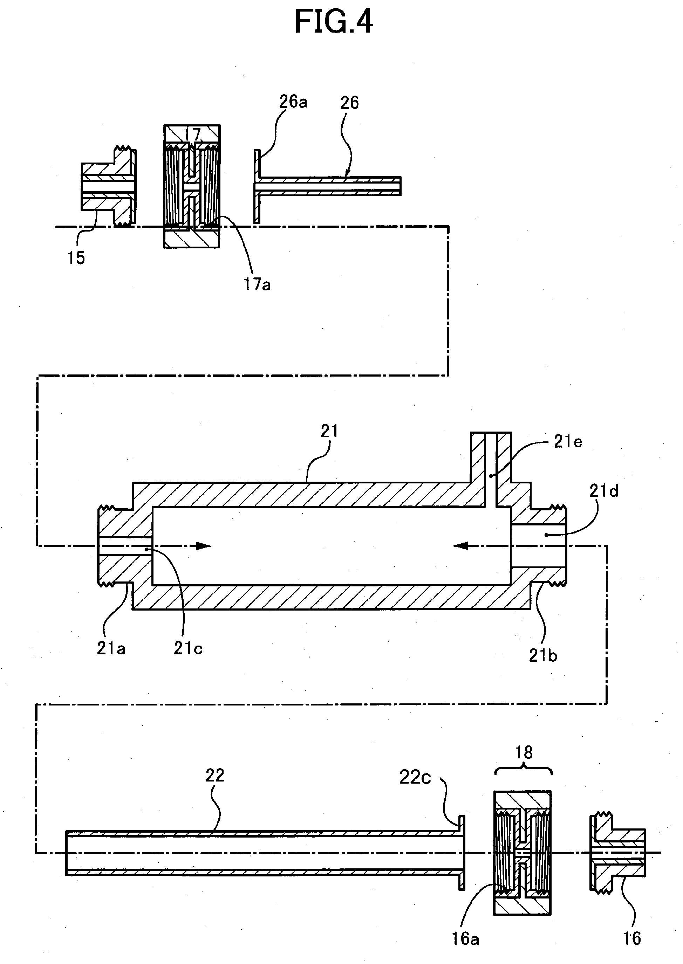

FIG. 4 is an exploded perspective view showing the reaction tank (20). In FIG. 4, a receiving side wall is provided in a position extending in a direction of cross section of the outer tube 21 (e.g. a direction of a plane orthogonal to the sheet as seen FIG. 4) on the treatment-object fluid receiving side of the outer tube 21 as the outer cylindrical body in the longitudinal direction thereof. The receiving side wall is provided with a pipe insertion through-hole 21c formed therethrough in a thickness direction, which is configured to pass the inflow pipe 26 therethrough from the outside of the pipe toward the inside thereof. The inflow pipe 26 is inserted into the pipe insertion through-hole 21c from outside the outer tube 21, and, inside the outer tube 21, an extreme end portion of the inflow pipe 26 enters into the inner tube 22 through a receiving opening provided in an end of the inner tube 22 on the treatment-object fluid receiving side in the longitudinal direction (see FIG. 3). Then, the treatment-object fluid formed of the liquid waste is caused to flow into the inner tube 22.

A cylindrical wall of the outer tube 21 is provided with an oxidizing agent receiving opening 21e to receive the air as the oxidizing agent in the inter-tube space between the outer tube 21 and the inner tube 22. As described above, incoming air pressure-fed through the oxidizing agent receiving opening 21e moves through the inter-tube space from the discharge wall side toward the receiving wall side in the longitudinal direction. Then, the air enters into the inner tube 22 through the gap between the receiving opening provided in the end of the inner tube 22 on the treatment-object fluid receiving side, and the inflow pipe.

The end portion of the outer tube 21 on the treatment-object fluid discharge side in the longitudinal direction is provided with the discharge side wall in a position extending in the tube cross-sectional direction. Then, the discharge side wall is provided with an inner tube insertion through-hole 21d formed therethrough in the thickness direction, which is configured to insert the inner tube 22 thereinto. Also, a region located outside the outer tube 21, of the entire area of the inner tube 22 in the longitudinal direction, is provided with a protruding portion 22c protruding from the tube outer periphery, in a position extending over the entire tube outer periphery. The inner tube 22 inserted into the inner tube insertion through-hole 21d is cantilevered on the discharge side wall of the outer tube 21, by pressing the protruding portion 22c against the discharge side wall of the outer tube 21 outside the outer tube 21.

In such a configuration, under a condition where the outer tube 21 made of stainless steel and the inner tube 22 made of titanium are heated, even if, due to a difference between the coefficients of linear expansion, an inner wall of the inner tube insertion through-hole 21d and an outer periphery of a rear end portion of the inner tube 22 are separated from each other to form a gap therebetween, the protruding portion 22c of the inner tube 22 is pressed against the discharge side wall of the outer tube 21 along an axial direction of the outer tube by a pressing device, outside the outer tube 21. Thus, the inner tube 22 under thermal expansion or the inner tube 22 after thermal expansion is continuously pressed against the discharge side wall of the outer tube 21 by the pressing device, regardless of a change in the diameter of the inner tube 22 or a change in the diameter of the inner tube insertion through-hole 21d provided in the discharge side wall of the outer tube 21, and thereby, the inner tube 22 can be continuously cantilevered on the discharge side wall. Therefore, the inner tube 22 can be cantilevered on the discharge side wall of the outer tube 21 over a long period.

In the end portion of the outer tube 21 on the treatment-object fluid discharge side in the longitudinal direction, a discharge pipe portion 21b for discharging the treatment-object fluid treated in the inner tube 22 from the reaction tank (20) protrudes from an outer surface of the discharge side wall of the outer tube 21 and communicates with the inner tube insertion through-hole 21d. Then, while the protruding portion 22c of the inner tube 22 inserted into the inside of the discharge pipe portion 21b and the inner tube insertion through-hole 21d abuts against an edge of the discharge pipe portion 21b outside the outer tube 21, the protruding portion 22c is pressed against the edge of the discharge pipe portion 21b by the outlet joint 18 which links the transport pipe 16 for transporting the treatment-object fluid and the discharge pipe portion 21b. Thereby, the outlet joint 18 functions as the pressing device for pressing the protruding portion 22c the edge of the discharge pipe portion 21b of the discharge side wall. In such a configuration, the outlet joint 18 is loosened thereby to permit separation of the discharge pipe portion 21b and the transport pipe 16 from each other and also removal of the inner tube 22 from the outer tube 21.

A protruding portion 26a protruding from the pipe outer peripheral surface in a normal direction is provided in a position extending entirely around the pipe outer peripheral surface, in a region located outside the outer tube 21, of the longitudinal entire area of the inflow pipe 26 inserted into the pipe insertion through-hole 21c provided in the receiving side wall of the outer tube 21 in order to allow the flowing of the treatment-object fluid into the inner tube 22. The inflow pipe 26 inserted into the pipe insertion through-hole 21c of the receiving side wall of the outer tube 21 is cantilevered on the receiving side wall of the outer tube 21 by pressing the protruding portion 26a toward the receiving side wall of the outer tube 21 outside the outer tube 21. In such a configuration, even if, due to a difference in coefficients of linear expansion between the outer tube 21 made of stainless steel and the inflow pipe 26 made of corrosion-resistant metal such as titanium, the outer peripheral surface of the outer tube 21 and the inner wall of the pipe insertion through-hole 21c are separated from each other and a gap is formed between them, the protruding portion 26a of the inflow pipe 26 is continuously pressed against the receiving side wall of the outer tube 21 outside the outer tube 21. Therefore, the inflow pipe 26 can be cantilevered on the receiving side wall of the outer tube 21 over a long period.

The outer surface of the receiving side wall of the outer tube 21 is provided with an inlet pipe portion 21a protruding in such a way as to communicate with the pipe insertion through-hole 21c. With the inflow pipe 26 inserted into the inlet pipe portion 21a and the pipe insertion through-hole 21c, the protruding portion 26a abuts against the edge of the inlet pipe portion 21a. Then, in the first embodiment, the protruding portion 26a of the inflow pipe 26 is pressed against the edge of the inlet pipe portion 21a by the inlet joint 17 which links the feed pipe 15 for feeding the treatment-object fluid to the inlet pipe portion 21a with the inlet pipe portion 21a, and thereby, the inlet joint 17 functions as a second pressing device. In such a configuration, the inlet joint 17 is loosened thereby to permit separation of the feed pipe 15 and the inlet pipe portion 21a from each other and also removal of the inflow pipe 26 from the outer tube 21.

The outlet joint 18 which links the discharge pipe portion 21b and the transport pipe 16 and the inlet joint 17 which links the feed pipe 15 and the inlet pipe portion 21a are provided with corrosion-resistant layers (18a, 17a), respectively, which are formed on inner walls which contact a liquid. Thereby, corrosion of the joints due to direct contact of a base materiel of the joints with the liquid waste or a treated liquid can be avoided.

Incidentally, in the first embodiment, the air is fed as the oxidizing agent by the pressure-feed pump 6 as oxidizing agent a pressure-feeding device; however, oxygen, ozone, hydrogen peroxide, or a mixture of two or more of these, may be pressure-fed in place of the air.

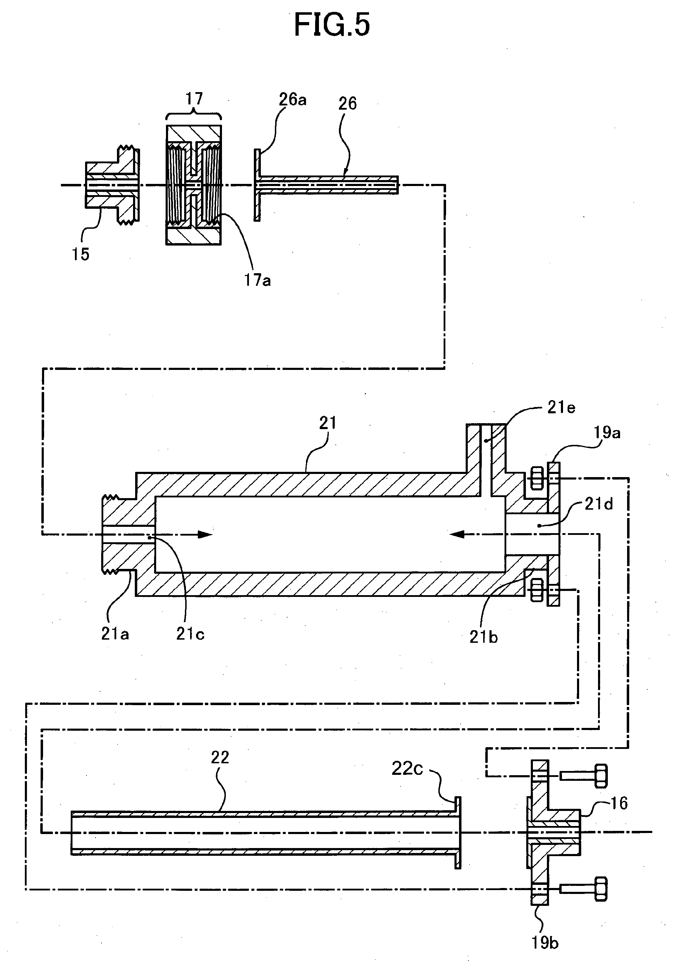

FIG. 5 is an exploded sectional view showing the reaction tank 20 of a waste water treatment apparatus according to a first modification. In the first embodiment, a screwed coupling type is used as the outlet joint (18); however, in the first modification, a flange type (19a, 19b) is used as the outlet joint.

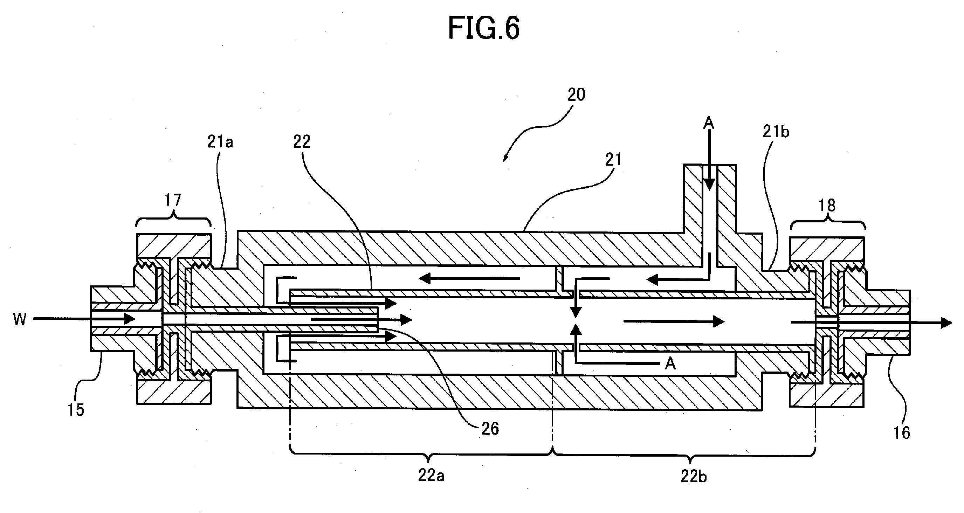

FIG. 6 is a longitudinal sectional view showing the reaction tank 20 of a waste water treatment apparatus according to a second modification. The reaction tank 20 is configured so that the air A pressure-fed into the inter-tube space between the inner tube 22 and the outer tube 21 is supplied only to the second decomposition reactor 22b, of the first decomposition reactor 22a and the second decomposition reactor 22b of the inner tube 22. In such a configuration, the first decomposition reactor 22a intensively processes organic matter into low-molecular form by hydrolysis requiring no oxygen, and thereafter, the second decomposition reactor 22b can intensively subject the low-molecular organic matter or ammonium nitrogen to oxidative decomposition.

Next, a waste water treatment apparatus according to a second embodiment will be described. Incidentally, unless specified below, a configuration of the waste water treatment apparatus according to the second embodiment is the same as that of the waste water treatment apparatus according to the first embodiment.

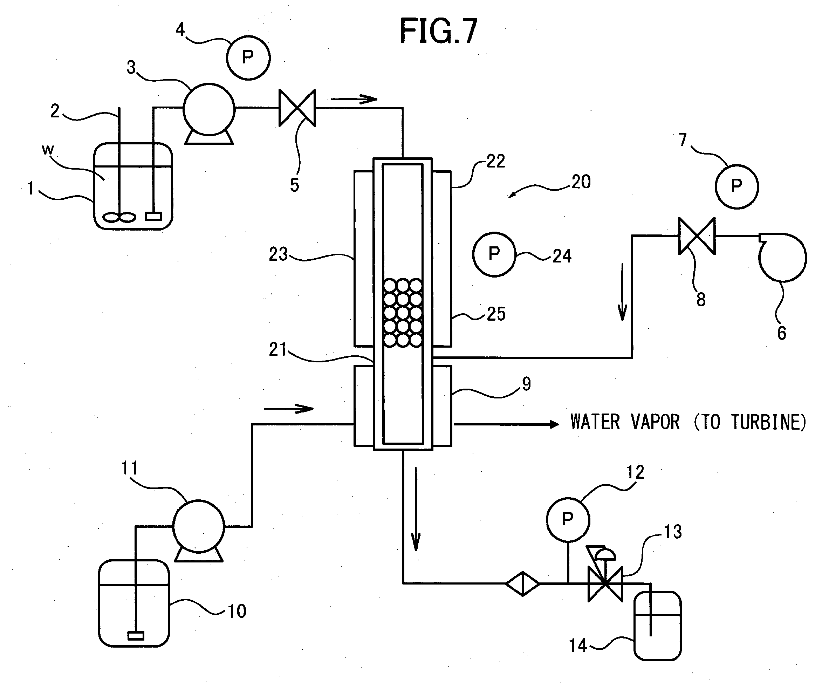

FIG. 7 is a flow sheet showing the waste water treatment apparatus according to the second embodiment and a flow of treatment. In the waste water treatment apparatus according to the second embodiment, the reaction tank 20 is disposed in a position extending vertically. The reaction tank 20 is in a position with its inlet side oriented vertically upward and its outlet side oriented vertically downward. In the reaction tank 20, a mixed fluid of liquid waste and air is transported vertically from an upward part toward a downward part.

The heat exchanger 9 is provided in a downstream end portion of the reaction tank 20 in the fluid transport direction, rather than the transport pipe for transporting a treated fluid discharged from the reaction tank 20. Then, heat transferred from the mixed fluid accommodated in the downstream end portion of the reaction tank 20 to a sidewall of a downstream end portion of the outer tube 21 is transferred to the heat exchange fluid thereby to cool the downstream end portion of the outer tube 21.

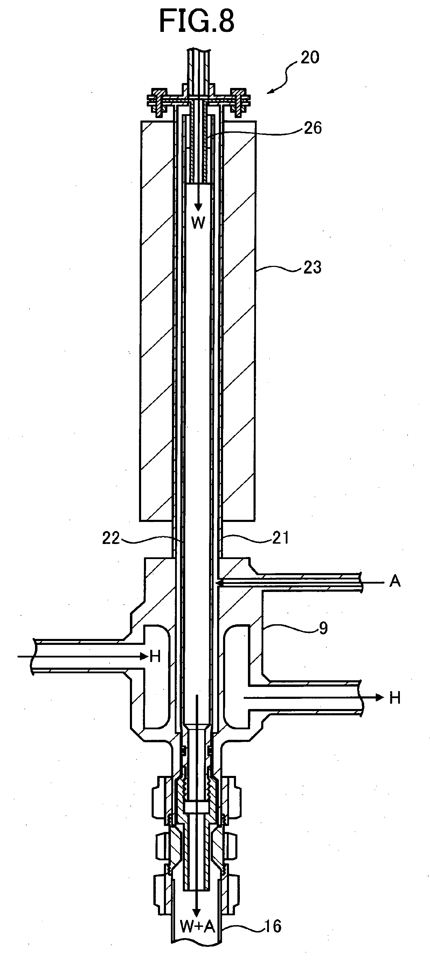

FIG. 8 is a longitudinal sectional view showing the reaction tank 20 of the waste water treatment apparatus according to the second embodiment. The downstream end portion of the outer tube 21 of the reaction tank 20 in the fluid transport direction has a heavy wall thickness, and the heat exchanger 9 as a cooling device is integrally formed with a heavy wall thickness portion. A heat exchange fluid H fed to the heat exchanger 9 comes in direct contact with the outer tube 21 thereby to efficiently cool the outer tube 21. Stainless steel having a higher coefficient of thermal expansion than that of a material for the inner tube 22 is used as a material for the outer tube 21. Also, titanium having a lower coefficient of thermal expansion than that of the stainless steel is used as the material for the inner tube 22.

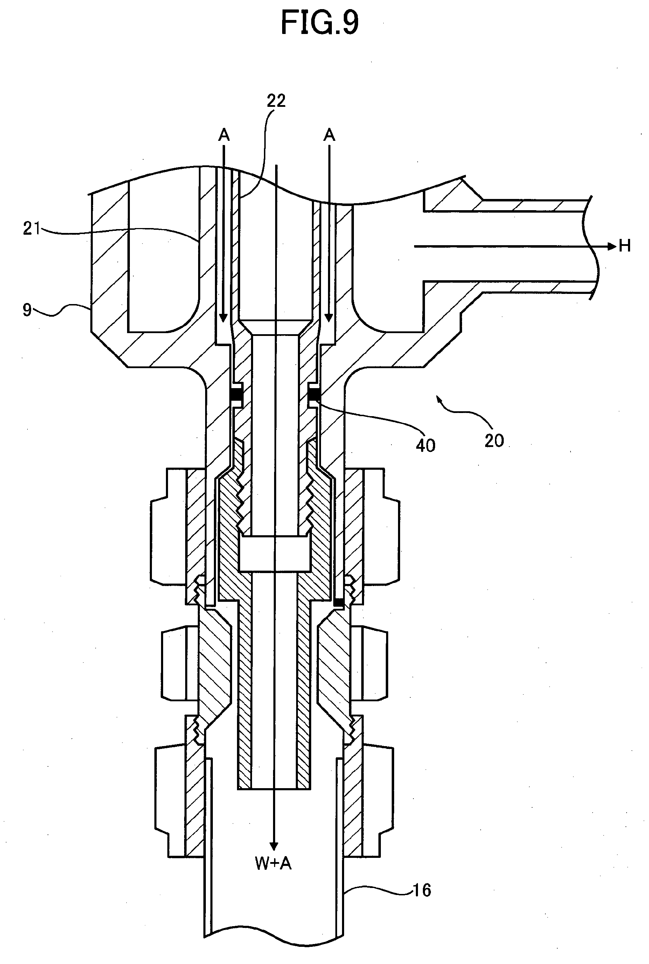

FIG. 9 is an enlarged longitudinal sectional view showing a downstream end portion of the reaction tank 20 in the fluid transport direction. The downstream end portion of the outer tube 21 in the fluid transport direction has a smaller inner diameter than that of an upstream portion thereof so that the inner tube 22 can be cantilevered. However, even if the inner diameter is smaller, a gap, although slight, is formed between an inner peripheral surface of the downstream end portion of the outer tube 21 in the fluid transport direction and an outer peripheral surface of the downstream end portion of the inner tube 22 in the fluid transport direction. Under this condition, the air A pressure-fed into the inter-tube space flows through the gap and into the transport pipe 16.

A ring-shaped packing 40 is fitted with the outer peripheral surface of the downstream end portion of the inner tube 22 in the fluid transport direction. An inner diameter of the packing 40 is substantially the same as an inner diameter of the outer tube 21. The packing 40 is made of a fluorocarbon resin having a lower coefficient of linear expansion than that of the material (stainless steel) for the outer tube 21 and a higher coefficient of linear expansion than that of the material (titanium) for the inner tube 22. Then, the packing 40 fits tightly in the slight gap between the outer peripheral surface of the inner tube 22 and the inner peripheral surface of the outer tube 21 thereby to completely close the gap. The packing closes the gap in this manner, and thereby, a leakage of the air A from the inter-tube space into the transport pipe 16 can be prevented. In addition, the inner tube 22 is confined in the outer tube 21 so as not to move, and thereby, the inner tube 22 can be cantilevered to the outer tube 21.

The heat exchange fluid H fed into the heat exchanger 9 directly cools the downstream end portion of the outer tube 21 in the fluid transport direction thereby to make the temperature of the downstream end portion lower than the temperature of the inner tube 22. Thereby, a difference between the amount of thermal expansion of the downstream end portion of the outer tube 21 made of stainless steel having a higher coefficient of linear expansion than that of the inner tube 22 and the amount of thermal expansion of the inner tube 22 is reduced thereby to enable maintaining the gap with a substantially fixed size. Thus, even a small member such as the packing 40 can continue completely closing the gap regardless of whether the reaction tank 20 is under operating or stopped conditions. Also, the coefficient of linear expansion of the packing 40 has a value intermediate between the coefficients of linear expansion of the outer tube 21 and the inner tube 22, and thus, the width of the packing 40 can be maintained with substantially the same size as that of the gap. Therefore, even during operation in which the temperature in the reaction tank 20 is increased, the packing 40 attached to the outer peripheral surface of the downstream end portion of the inner tube 22 is continuously in close contact with the inner peripheral surface of the outer tube 21, and the inner tube 22 can be continuously cantilevered on the outer tube 21. Therefore, the inner tube 22 can be cantilevered on the outer tube 21 over a long period.

Incidentally, when there is a relatively small difference in coefficient of linear expansion between the material for the outer tube 21 and the material for the inner tube 22, during operation, the outer peripheral surface of the inner tube 22 can be continuously in close contact with the inner peripheral surface of the outer tube 21 even without the packing 40 being interposed therebetween, and the inner tube 22 can be continuously cantilevered on the outer tube 21.

The foregoing is illustrative only, and the present invention achieves advantageous effects characteristic of aspects given below.

### (Aspect A)

An aspect A provides a liquid waste treatment apparatus including a reaction tank having a double-tube structure including an outer tubular body (for example, the outer tube 21) in tubular form and an inner tubular body (for example, the inner tube 22) in tubular form disposed inside the outer tubular body, the liquid waste treatment apparatus configured such that, under a condition where the inner tubular body into which a fluid is introduced is cantilevered by the outer tubular body in a downstream end portion of the inner tubular body in a fluid transport direction, organic matter in a treatment-object fluid undergoes oxidative decomposition in a process in which the treatment-object fluid (for example, the liquid waste W) and an oxidizing agent (for example, the air A) are mixed together, heated and pressurized while introduced into the inner tubular body, and the treatment-object fluid and the oxidizing agent in the inner tubular body are transported toward the downstream end portion along a tube longitudinal direction, in which the inner tubular body is provided with a protruding portion (for example, 22c) protruding from an outer peripheral surface of the downstream end portion of the inner tubular body and extending around the whole periphery of the outer peripheral surface, and an upstream end of the protruding portion in the fluid transport direction is pressed by a pressing device toward a downstream end of the outer tubular body in the fluid transport direction along the tube longitudinal direction, whereby the inner tubular body is cantilevered by the outer tubular body.

### (Aspect B)

An aspect B provides a liquid waste treatment apparatus including a reaction tank having a double-tube structure including an outer tubular body in tubular form and an inner tubular body in tubular form disposed inside the outer tubular body, the liquid waste treatment apparatus configured such that, under a condition where the inner tubular body into which a fluid is introduced is cantilevered by the outer tubular body in a downstream end portion of the inner tubular body in a fluid transport direction, organic matter in a treatment-object fluid undergoes oxidative decomposition in a process in which the treatment-object fluid and an oxidizing agent are mixed together, heated and pressurized while introduced into the inner tubular body, and the treatment-object fluid and the oxidizing agent in the inner tubular body are transported toward the downstream end portion along a tube longitudinal direction, in which an outer tubular body made of a material (for example, stainless steel) having a higher coefficient of linear expansion than that of a material (for example, titanium) for the inner tubular body is used as the outer tubular body, and the outer tubular body is provided with a cooling device (for example, the heat exchanger 9) for cooling a downstream end portion of the outer tubular body in the fluid transport direction.

### (Aspect C)

According to an aspect C, in the aspect B, a packing (for example, the packing 40) to fill a gap is interposed in the gap between an outer peripheral surface of the downstream end portion of the inner tubular body in the fluid transport direction and an inner peripheral surface of the outer tubular body, and the outer peripheral surface and the inner peripheral surface are fitted together with the packing in between, whereby the inner tubular body is cantilevered by the outer tubular body. In this configuration, the packing having a coefficient of linear expansion intermediate between the coefficient of linear expansion of the material for the inner tubular body and the coefficient of linear expansion of the material for the outer tubular body is adopted as a material for the packing, and thereby, the inner tubular body can be more reliably fitted in the outer tubular body.

### (Aspect D)

According to an aspect D, in the aspect A, a transport pipe (for example, the transport pipe 16) is provided side by side with the outer tubular body along the tube longitudinal direction, the transport pipe being configured to receive therein the treatment-object fluid which has been treated, discharged from the downstream end portion of the inner tubular body, and to transport the treatment-object fluid, and the protruding portion is pressed against the downstream end of the outer tubular body in the fluid transport direction by a joint (for example, the outlet joint 18) interposed in between the downstream end portion of the inner tubular body and an upstream end portion of the transport pipe in the fluid transport direction and configured to link the inner tubular body and the transport pipe together, whereby the joint functions as the pressing device. In this configuration, as previously described, the joint is loosened to permit delinking the discharge pipe portion and the transport pipe from each other and also removing the inner tubular body from the outer tubular body.

### (Aspect E)

According to an aspect E, in the aspect D, an inflow pipe configured to allow the treatment-object fluid to flow into the inner tubular body is inserted into an upstream end portion of the outer tubular body in the fluid transport direction, along the tube longitudinal direction, and an extreme end of the inflow pipe is inserted into the inner tubular body. In this configuration, the outer peripheral surface of the inflow pipe inserted into the upstream end portion of the inner tubular body is partially brought into intimate contact with the upstream end portion, as the free end, of the inner tubular body o in the fluid transport direction, and thereby, the upstream end portion can be supported by the inflow pipe. This enables avoiding the occurrence of vibration of the inner tubular body around a cantilevered portion of the inner tubular body.

### (Aspect F)

According to an aspect F, in the aspect E, the inflow pipe is provided with a pipe protruding portion (for example, the protruding portion 26a) protruding from an outer peripheral surface of an extreme end portion of the inflow pipe, and an upstream end of the pipe protruding portion in the fluid transport direction is pressed against an upstream end of the outer tubular body in the fluid transport direction by a second pressing device, whereby the inner tubular body is cantilevered by the outer tubular body. In this configuration, as previously described, the inflow pipe can be cantilevered by the receiving side wall of the outer tubular body over a long period.

### (Aspect G)

According to an aspect G, in the aspect F, a feed pipe (for example, the feed pipe 15) configured to feed the treatment-object fluid to the inflow pipe is provided side by side with the outer tubular body along the tube longitudinal direction, and the pipe protruding portion is pressed against the upstream end of the outer tubular body in the fluid transport direction by a joint (for example, the inlet joint) interposed in between a downstream end portion of the feed pipe in the fluid transport direction and an upstream end portion of the inflow pipe in the fluid transport direction and configured to link the feed pipe and the inflow pipe together, whereby the joint functions as the second pressing device. In this configuration, as previously described, the joint is loosened to permit delinking the feed pipe from the reaction tank and also removing the inflow pipe from the outer tubular body.

### (Aspect H)

According to an aspect H, in any one of the aspects D and G, an inner tubular body made of Ti, Ta, Au, Pt, Ir, Rh, Pd, or an alloy of a combination of two or more kinds of these is used as the inner tubular body, an outer tubular body made of any one of stainless steel and a nickel alloy is used as the outer tubular body, and joints each having a corrosion-resistant layer formed on an inner wall which contacts a liquid are used as the joint to link the inner tubular body and the transport pipe together and the joint to link the feed pipe and the inflow pipe together. In this configuration, the inner tubular body which directly contacts the treated liquid can achieve high corrosion resistance, and also, the outer tubular body which does not contact the treated liquid can achieve high pressure resistance. Further, corrosion of the joints by direct contact of the base material for the joints with the liquid waste or the treated liquid can be avoided.

### (Aspect I)

According to an aspect I, in any one of the aspects A to H, a catalyst to accelerate the oxidative decomposition of the organic matter is provided in the inner tubular body. In this configuration, while in the inner tubular body the treatment-object fluid is brought into contact with the catalyst, the organic matter in the treatment-object fluid can undergo good oxidative decomposition.

### (Aspect J)

According to an aspect J, in any one of the aspects A to I, the treatment-object fluid in the inner tubular body is heated to 100°C to 700°C by a heating device. In this configuration, in the inner tubular body, the treatment-object fluid can be heated to high temperature to accelerate the oxidative decomposition of the organic matter in the treatment-object fluid.

### (Aspect K)

According to an aspect K, in any one of the aspects A to J, the treatment-object fluid in the inner tubular body is pressurized in a range of 0.5 to 30 MPa. In this configuration, in the inner tubular body, the treatment-object fluid can be pressurized to high pressure to accelerate the oxidative decomposition of the organic matter in the treatment-object fluid.

### (Aspect L)

According to an aspect L, in any one of the aspects A to K, an oxidizing agent pressure-feeding device for pressure-feeding oxygen, air, ozone, hydrogen peroxide, or a mixture of two or more kinds of these, as the oxidizing agent into the gap is provided. In this configuration, the oxidizing agent can be mixed with the treatment-object fluid to cause the occurrence of the oxidative decomposition in the treatment-object fluid.

### (Aspect M)

According to an aspect M, in the aspect I, a catalyst containing any one element ofRu, Pd, Rh, Pt, Au, Ir, Os, Fe, Cu, Zn, Ni, Co, Ce, Ti, and Mn is used as the catalyst. In this configuration, the oxidative decomposition of the organic matter can be accelerated by the catalyst.

In the present invention including the above-described first configuration, the protruding portion provided in the downstream end portion of the inner tubular body in the fluid transport direction is pressed by the pressing device toward the downstream end of the outer tubular body in the fluid transport direction along the tube longitudinal direction, and thereby, the inner tubular body is cantilevered by the outer tubular body. Under this condition, even when the outer tubular body and the inner tubular body undergo thermal expansion with different coefficients of linear expansion with increasing heat, the protruding portion of the inner tubular body can be continuously pressed by the pressing device against the downstream end of the outer tubular body in the fluid transport direction. Thus, regardless of the presence or absence of thermal expansion of the inner tubular body and the outer tubular body, the protruding portion of the inner tubular body is continuously pressed against the downstream end of the outer tubular body by the pressing device, thereby enabling the outer tubular body to continue cantilevering the inner tubular body. Therefore, the inner tubular body can be cantilevered by the outer tubular body over a long period.

Also, in the present invention including the above-described second configuration, the downstream end portion of the outer tubular body in the fluid transport direction is cooled by the cooling device, and thereby, the temperature of the downstream end portion of the outer tubular body becomes lower than that of the inner tubular body. This reduces a difference between the amount of thermal expansion of the downstream-side end portion of the outer tubular body made of the material having a higher coefficient of linear expansion than that of the material for the inner tubular body and the amount of thermal expansion of the inner tubular body, and thereby, the outer peripheral surface of the downstream end portion of the inner tubular body is continuously brought into intimate contact with the inner peripheral surface of the outer tubular body, so that the inner tubular body can be continuously cantilevered by the outer tubular body. Therefore, the inner tubular body can be cantilevered by the outer tubular body over a long period.

Incidentally, in the present invention, it is to be understood that the configurations of the outer tubular body and the inner tubular body are not limited to cylindrical configuration but may include any configuration, provided that it is a configuration having a hollow, such as a hollow polygonal prism configuration.

Although the preferred embodiments of the present invention have been described, it should be understood that the present invention is not limited to these embodiments, various modifications and changes can be made to the embodiments by those skilled in the art as long as such modifications and changes are within the scope of the present invention as defined by the Claims.

## Claims

1. A liquid waste treatment apparatus comprising:
a reaction tank (20) having a double-tube structure including an outer tubular body (21) and an inner tubular body (22) disposed inside the outer tubular body and supported at a downstream end in a fluid transport direction thereof, whereby organic matter in a treatment-object fluid can undergo oxidative decomposition when mixed with an oxidizing agent, heated and pressurized while introduced into the inner tubular body, and the treatment-object fluid and the oxidizing agent in the inner tubular body are transported toward the downstream end portion along a tube longitudinal direction,
**characterized in that** the inner tubular body is provided with a protruding portion (22c) protruding from an outer surface of the downstream end portion of the inner tubular body and extending around the whole periphery of the outer surface, and the protruding portion is pressed toward a downstream end of the outer tubular body in the fluid transport direction along the tube longitudinal direction, whereby the inner tubular body is supported at the downstream end in the fluid transport direction by the outer tubular body so as to form a cantilever, wherein the inner tubular body does not move relative to the outer tubular body

2. The liquid waste treatment apparatus according to claim 1 wherein
a transport pipe (16) is provided side by side with the outer tubular body along the tube longitudinal direction, the transport pipe being configured to receive therein the treatment-object fluid which has been treated, discharged from the downstream end portion of the inner tubular body, and to transport the treatment-object fluid, and
the protruding portion is pressed against the downstream end of the outer tubular body in the fluid transport direction by a joint (18) interposed in between the downstream end portion of the inner tubular body and an upstream end portion of the transport pipe in the fluid transport direction and configured to link the inner tubular body and the transport pipe together, whereby functioning the joint as a pressing device.

3. The liquid waste treatment apparatus according to claim 2, wherein
an inflow pipe (26) configured to allow the treatment-object fluid to flow into the inner tubular body is inserted into an upstream end portion of the outer tubular body in the fluid transport direction, along the tube longitudinal direction, and an extreme end of the inflow pipe is inserted into the inner tubular body.

4. The liquid waste treatment apparatus according to claim 3, wherein
the inflow pipe is provided with a pipe protruding portion (26a) protruding from an outer surface of an extreme end portion of the inflow pipe, and
an upstream end of the pipe protruding portion in the fluid transport direction is pressed against an upstream end of the outer tubular body in the fluid transport direction, whereby the inner tubular body is supported at the upstream end in the fluid transport direction by the outer tubular body so as to form a cantilever, wherein the inner tubular body does not move relative to the outer tubular body.

5. The liquid waste treatment apparatus according to claim 4, wherein
a feed pipe configured to feed the treatment-object fluid to the inflow pipe is provided side by side with the outer tubular body along the tube longitudinal direction, and
the pipe protruding portion is pressed against the upstream end of the outer tubular body in the fluid transport direction by a joint interposed in between a downstream end portion of the feed pipe in the fluid transport direction and an upstream end portion of the inflow pipe in the fluid transport direction and configured to link the feed pipe and the inflow pipe together, whereby functioning the joint as a second pressing device.

6. The liquid waste treatment apparatus according to claim 5, wherein
an inner tubular body made of Ti, Ta, Au, Pt, Ir, Rh, Pd, or an alloy of a combination of two or more kinds of these is used as the inner tubular body,
an outer tubular body made of any one of stainless steel and a nickel alloy is used as the outer tubular body, and
joints each having a corrosion-resistant layer formed on an inner wall which contacts a liquid are used as the joint to link the inner tubular body and the transport pipe together and the joint to link the feed pipe and the inflow pipe together.

7. The liquid waste treatment apparatus according to any one of the preceding claims, wherein
a catalyst to accelerate the oxidative decomposition of the organic matter is provided in the inner tubular body.

8. The liquid waste treatment apparatus according to claim 7, wherein
a catalyst containing any one element ofRu, Pd, Rh, Pt, Au, Ir, Os, Fe, Cu, Zn, Ni, Co, Ce, Ti, and Mn is used.

9. The liquid waste treatment apparatus according to any one of the preceding claims, wherein
the treatment-object fluid in the inner tubular body is heated to 100°C to 700°C by a heating device.

10. The liquid waste treatment apparatus according to any one of the preceding claims, wherein
the treatment-object fluid in the inner tubular body is pressurized in a range of 0.5 to 30 MPa.

11. The liquid waste treatment apparatus according to any one of the preceding claims, wherein
an oxidizing agent pressure-feeding device (6) for pressure-feeding oxygen, air, ozone, hydrogen peroxide, or a mixture of two or more kinds of these, as the oxidizing agent is provided between the inner tubular body and the outer tubular body.

## Patentansprüche

1. Abwasserbehandlungsvorrichtung, die Folgendes umfasst:
einen Reaktionstank (20) mit einer Doppelröhrenstruktur, der einen äußeren röhrenförmigen Körper (21) und einen inneren röhrenförmigen Körper (22), der in dem äußeren röhrenförmigen Körper angeordnet ist und an einem stromabwärtigen Ende in einer Fluidtransportrichtung getragen wird, aufweist, wodurch organische Materie in einem Fluid, das Gegenstand der Behandlung ist, oxidativer Zersetzung ausgesetzt sein kann, wenn sie mit einem Oxidationsmittel gemischt, erhitzt und mit Druck beaufschlagt wird, während sie in den inneren röhrenförmigen Körper eingeführt wird, und das Fluid, das Gegenstand der Behandlung ist, und das Oxidationsmittel in dem inneren röhrenförmigen Körper entlang einer Röhrenlängsrichtung zu dem stromabwärtigen Stirnabschnitt transportiert werden,
**dadurch gekennzeichnet, dass** der innere röhrenförmige Körper mit einem vorstehenden Abschnitt (22c) versehen ist, der von einer äußeren Oberfläche des stromabwärtigen Stirnabschnitts des inneren röhrenförmigen Körpers vorsteht und sich um den gesamten Umfang der äußeren Oberfläche erstreckt, und der vorstehende Abschnitt in der Fluidtransportrichtung entlang der Röhrenlängsrichtung zu einem stromabwärtigen Ende des äußeren röhrenförmigen Körpers gedrückt wird, wodurch der innere röhrenförmige Körper an dem stromabwärtigen Ende in der Fluidtransportrichtung durch den äußeren röhrenförmigen Körper getragen wird, um eine Auskragung zu bilden, wobei sich der innere röhrenförmige Körper nicht in Bezug auf den äußeren röhrenförmigen Körper bewegt.

2. Abwasserbehandlungsvorrichtung nach Anspruch 1, wobei
ein Transportrohr (16) entlang der Röhrenlängsrichtung neben dem äußeren röhrenförmigen Körper vorgesehen ist, wobei das Transportrohr konfiguriert ist, darin das Fluid, das Gegenstand der Behandlung ist, das behandelt worden und von dem stromabwärtigen Stirnabschnitt des inneren röhrenförmigen Körper abgelassen worden ist, aufzunehmen und das Fluid, das Gegenstand der Behandlung ist, zu transportieren, und
der vorstehende Abschnitt durch eine Verbindung (18), die zwischen den stromabwärtigen Stirnabschnitt des inneren röhrenförmigen Körpers und einen stromaufwärtigen Stirnabschnitt des Transportrohrs in der Fluidtransportrichtung eingefügt ist, gegen das stromabwärtige Ende des äußeren röhrenförmigen Körpers gedrückt wird und konfiguriert ist, den inneren röhrenförmigen Körper und das Transportrohr zusammenzufügen, wodurch die Verbindung als eine Druckeinrichtung dient.

3. Abwasserbehandlungsvorrichtung nach Anspruch 2, wobei
ein Einströmrohr (26), das konfiguriert ist, dem Fluid, das Gegenstand der Behandlung ist, zu erlauben, in den inneren röhrenförmigen Körper zu strömen, und in einen stromaufwärtigen Stirnabschnitt des äußeren röhrenförmigen Körpers in der Fluidtransportrichtung entlang der Röhrenlängsrichtung eingefügt ist und ein äußerstes Ende des Einströmrohrs in den inneren röhrenförmigen Körper eingefügt ist.

4. Abwasserbehandlungsvorrichtung nach Anspruch 3, wobei
das Einströmrohr mit einem vorstehenden Rohrabschnitt (26a) versehen ist, der von einer äußeren Oberfläche eines äußersten Stimabschnitts des Einströmrohres vorsteht, und
ein strömaufwärtiges Ende des vorstehenden Rohrabschnitts in der Fluidtransportrichtung gegen ein stromaufwärtiges Ende des äußeren röhrenförmigen Körpers in der Fluidtransportrichtung gedrückt wird, wodurch der innere röhrenförmige Körper an dem stromabwärtigen Ende in der Fluidtransportrichtung durch den äußeren röhrenförmigen Körper getragen wird, um eine Auskragung zu bilden, wobei sich der innere röhrenförmige Körper in Bezug auf den äußeren röhrenförmigen Körper nicht bewegt.

5. Abwasserbehandlungsvorrichtung nach Anspruch 4, wobei
ein Zuführrohr, das konfiguriert ist, das Fluid, das Gegenstand der Behandlung ist, zu dem Einströmrohr zu führen, neben dem äußeren röhrenförmigen Körper entlang der Röhrenlängsrichtung vorgesehen ist und
der vorstehende Rohrabschnitt durch eine Verbindung, die zwischen einen stromabwärtigen Stirnabschnitt des Zuführrohrs in der Fluidtransportrichtung und einen stromaufwärtigen Stirnabschnitt des Einströmrohrs in der Fluidtransportrichtung eingefügt ist, gegen das stromaufwärtige Ende des äußeren röhrenförmigen Körpers in der Fluidtransportrichtung gedrückt wird und konfiguriert ist, das Zuführrohr und das Einströmrohr miteinander zu verbinden, wodurch die Verbindung als eine zweite Druckeinrichtung dient.

6. Abwasserbehandlungsvorrichtung nach Anspruch 5, wobei
ein innerer röhrenförmiger Körper, der aus Ti, Ta, Au, Pt, Ir, Ph, Pd oder einer Legierung einer Kombination von zwei Arten hiervon gebildet ist, als der innere röhrenförmige Körper verwendet wird,
ein äußerer röhrenförmiger Körper, der aus rostfreiem Stahl oder einer Nickellegierung hergestellt ist, als der äußere röhrenförmige Körper verwendet wird und
Verbindungen, wovon jede eine korrosionsbeständige Schicht hat, die auf einer inneren Wand gebildet ist, die eine Flüssigkeit berührt, als die Verbindung, um den inneren röhrenförmigen Körper und das Transportrohr zusammenzufügen, und als die Verbindung, um das Zuführrohr und das Einströmrohr zusammenzufügen, verwendet werden.

7. Abwasserbehandlungsvorrichtung nach einem der vorhergehenden Ansprüche, wobei
ein Katalysator, um die oxidative Zersetzung der organischen Materie zu beschleunigen, in dem inneren röhrenförmigen Körper vorgesehen ist.

8. Abwasserbehandlungsvorrichtung nach Anspruch 7, wobei
ein Katalysator, der eines der Elemente Ru, Pd, Rh, Pt, Au, Ir, Os, Fe, Cu, Zn, Ni, Co, Ce, Ti und Mn enthält, verwendet wird.

9. Abwasserbehandlungsvorrichtung nach einem der vorhergehenden Ansprüche, wobei
das Fluid, das Gegenstand der Behandlung ist, in dem inneren röhrenförmigen Körper durch eine Heizeinrichtung auf 100 °C bis 700 °C erhitzt wird.

10. Abwasserbehandlungsvorrichtung nach einem der vorhergehenden Ansprüche, wobei das Fluid, das Gegenstand der Behandlung ist, in dem inneren röhrenförmigen Körper im Bereich von 0,5 bis 30 MPa mit Druck beaufschlagt wird.

11. Abwasserbehandlungsvorrichtung nach einem der vorhergehenden Ansprüche, wobei eine Einrichtung (6) zum Zuführen unter Druck von Oxidationsmitteln, um Sauerstoff, Luft, Ozon, Wasserstoffperoxid oder eine Mischung von zwei oder mehr Arten hiervon diesen als das Oxidationsmittel mit Druck zuzuführen, zwischen dem inneren röhrenförmigen Körper und dem äußeren röhrenförmigen Körper vorgesehen ist.

## Revendications

1. Appareil de traitement de déchets liquides, comprenant :
un réservoir de réaction (20) ayant une structure à double tube comprenant un corps tubulaire externe (21) et un corps tubulaire interne (22) disposé à l'intérieur du corps tubulaire externe et supporté au niveau d'une extrémité en aval dans sa direction de transport de fluide, moyennant quoi la matière organique dans un fluide objet de traitement peut subir la décomposition par oxydation lorsqu'elle est mélangée avec un agent oxydant, chauffée et mise sous pression tout en étant introduite dans le corps tubulaire interne et le fluide objet de traitement et l'agent oxydant dans le corps tubulaire interne sont transportés vers la partie d'extrémité en aval le long d'une direction longitudinale de tube,
**caractérisé en ce que** le corps tubulaire interne est prévu avec une partie en saillie (22c) faisant saillie à partir d'une surface externe de la partie d'extrémité en aval du corps tubulaire interne et s'étendant autour de toute la périphérie de la surface externe et la partie en saillie est comprimée vers une extrémité en aval du corps tubulaire externe dans la direction de transport de fluide le long de la direction longitudinale de tube, moyennant quoi le corps tubulaire interne est supporté au niveau de l'extrémité en aval dans la direction de transport de fluide par le corps tubulaire externe afin de former un porte-à-faux, dans lequel le corps tubulaire interne ne se déplace pas par rapport au corps tubulaire externe.

2. Appareil de traitement de déchets liquides selon la revendication 1, dans lequel
un tuyau de transport (16) est prévu côte à côte avec le corps tubulaire externe le long de la direction longitudinale de tube, le tuyau de transport étant configuré pour recevoir à l'intérieur de ce dernier le fluide objet de traitement qui a été traité, déchargé de la partie d'extrémité en aval du corps tubulaire interne, et pour transporter le fluide objet de traitement, et
la partie en saillie est comprimée contre l'extrémité en aval du corps tubulaire externe dans la direction de transport de fluide par un joint (18) intercalé entre la partie d'extrémité en aval du corps tubulaire interne et une partie d'extrémité en amont du tuyau de transport dans la direction de transport de fluide et configurée pour relier le corps tubulaire interne et le tuyau de transport ensemble, tout en faisant fonctionner le joint en tant que dispositif de pression.

3. Appareil de traitement de déchets liquides selon la revendication 2, dans lequel
un tuyau d'entrée (26) configuré pour permettre au fluide objet de traitement de s'écouler dans le corps tubulaire interne est inséré dans une partie d'extrémité en amont du corps tubulaire externe dans la direction de transport de fluide, le long de la direction longitudinale, et une extrémité extrême du tuyau d'entrée est insérée dans le corps tubulaire interne.

4. Appareil de traitement de déchets liquides selon la revendication 3, dans lequel
le tuyau d'entrée est prévu avec une partie en saillie de tuyau (26a) faisant saillie à partir d'une surface externe d'une partie d'extrémité extrême du tuyau d'entrée, et
une extrémité en amont de la partie en saillie de tuyau dans la direction de transport de fluide est comprimée contre une extrémité en amont du corps tubulaire externe dans la direction de transport de fluide, moyennant quoi le corps tubulaire interne est supporté au niveau de l'extrémité en amont dans la direction de transport de fluide par le corps tubulaire externe afin de former un porte-à-faux, dans lequel le corps tubulaire interne ne se déplace pas par rapport au corps tubulaire externe.

5. Appareil de traitement de déchets liquides selon la revendication 4, dans lequel
un tuyau d'alimentation configuré pour amener le fluide objet de traitement au tuyau d'entrée est prévu côte à côte avec le corps tubulaire externe le long de la direction longitudinale de tube, et
la partie en saillie de tuyau est comprimée contre l'extrémité en amont du corps tubulaire externe dans la direction de transport de fluide par un joint intercalé entre une partie d'extrémité en aval du tuyau d'alimentation dans la direction de transport de fluide et une partie d'extrémité en amont du tuyau d'entrée dans la direction de transport de fluide et configurée pour relier le tuyau d'alimentation et le tuyau d'entrée ensemble, tout en faisant fonctionner le joint en tant que second dispositif de pression.

6. Appareil de traitement de déchets liquides selon la revendication 5, dans lequel
un corps tubulaire interne réalisé à partir de Ti, Ta, Au, Pt, Ir, Rh, Pd ou un alliage d'une combinaison de deux types ou plus de ces derniers est utilisé en tant que corps tubulaire interne,
un corps tubulaire externe réalisé avec l'un quelconque parmi l'acier inoxydable et un alliage de nickel, est utilisé en tant que corps tubulaire externe, et
des joints ayant chacun une couche résistante à la corrosion formée sur une paroi interne qui est en contact avec un liquide, sont utilisés en tant que joint pour relier le corps tubulaire interne et le tuyau de transport ensemble et en tant que joint pour relier le tuyau d'alimentation et le tuyau d'entrée ensemble.

7. Appareil de traitement de déchets liquides selon l'une quelconque des revendications précédentes, dans lequel
un catalyseur pour accélérer la décomposition par oxydation de la matière organique est prévu dans le corps tubulaire interne.

8. Appareil de traitement de déchets liquides selon la revendication 7, dans lequel
un catalyseur contenant un élément quelconque parmi Ru, Pd, Rh, Pt, Au, Ir, Os, Fe, Cu, Zn, Ni, Co, Ce, Ti et Mn est utilisé.

9. Appareil de traitement de déchets liquides selon l'une quelconque des revendications précédentes, dans lequel
le fluide objet de traitement dans le corps tubulaire interne est chauffé de 100 °C à 700 °C par un dispositif de chauffage.

10. Appareil de traitement de déchets liquides selon l'une quelconque des revendications précédentes, dans lequel le fluide objet de traitement dans le corps tubulaire interne est mis sous pression dans une plage de 0,5 à 30 MPa.

11. Appareil de traitement de déchets liquides selon l'une quelconque des revendications précédentes, dans lequel un dispositif d'alimentation sous pression (6) d'agent oxydant pour amener sous pression de l'oxygène, de l'air, de l'ozone, du peroxyde d'hydrogène ou un mélange de deux ou plusieurs types de ces derniers, en tant qu'agent oxydant, est prévu entre le corps tubulaire interne et le corps tubulaire externe.
